# EUROPEAN PATENT SPECIFICATION

(11) **EP 2 031 825 B1**
(45) Date of publication and mention of the grant of the patent: **13.02.2013**
(21) Application number: 08170065.0
(22) Date of filing: 30.04.2004
(51) Int. Cl.: H04L 29/06, G06F 7/58, H04L 9/32, H04L 29/08

(54) **Wireless communication device with securely added randomness and related method**
Drahtlose Kommunikationsvorrichtung mit sicher hinzugefügter Zufälligkeit und zugehöriges Verfahren
Dispositif de communication sans fil à caractère aléatoire ajouté en toute sécurité et procédé correspondant

(43) Date of publication of application: 04.03.2009
(62) Divisional of application: 04252500.6
(73) Proprietor: Research In Motion Limited, Waterloo, ON N2L 3W8 (CA)
(72) Inventor: Brown, Michael K, Kitchener Ontario N2M 2Z2 (CA); Brown, Michael S, Waterloo Ontario N2K 4B1 (CA); Little, Herbert A, Waterloo Ontario N2T 2V8 (CA)
(74) Representative: Phillips, Emily Elizabeth

(56) References cited:
- WO-A-01/93528
- US-A- 5 794 139
- US-A1- 2003 063 742
- US-A1- 2003 128 843

## Description

### BACKGROUND OF THE INVENTION

### Field of the Invention

This invention generally relates to wireless communication systems including a wireless communication device having cryptographic functions requiring random data inputs (e.g., to generate cryptographic keys, certificates and the like).

### Related Art

Well known cryptographic processes (e.g., for generating cryptographic keys, certificates and the like) often require a mndom data input from time to time. There are many known forms of software and hardware random number generators that may be used and many of them depend upon input of a random "seed" data.

Initializing random seed data may be supplied during manufacture or may be provided subsequently by a desired known technique. However, for various reasons, it is possible that the randomness of data in the random seed may be less than desirable. For example, when a mobile wireless communication device is provisioned for the first time at the factory, it may leave the factory with a random seed that is not entirely random with respect to other devices manufactured and provisioned at approximately the same time. Furthermore, for various reasons it is sometimes necessary (or at least desirable) to "wipe" all stored data (including the stored random seed data) from the device memory. This may happen, for example, when updating software, recovering from abnormal conditions - or merely for enhanced security purposes subsequent to some period of uncontrolled access to the device. For example it is conceivable that if an unauthorized entity gains access to the device, then information might be ascertainable that relates to the content of a stored random seed and thus possibly make future cryptographic communication sessions vulnerable to unauthorized decryption. In other words, the device may pass out of possession of the authorized user (either intentionally or unintentionally) and thus become an untrusted device - unless suitable randomness can be restored to the random seed data stored in the device.

Accordingly, there is a needed ability to securely add randomness to a wireless communication device within a wireless communication system.

WO 01/93528 (Girard) and US 5,794,139 (Mizikovsky et al) disclose systems which implement periodic authentication procedures for wireless communication devices wherein a random number is securely downloaded, processed cryptographically using unique identifying data for that particular device and a result is then transmitted back to a central controlling site which can thereby check the authenticity of that device in the network; that is, whether the device is authorised to operate in the network. US-A-20030128843 discloses a system wherein a random number pool stored in a memory is restored from backed up data when a power loss has caused loss of memory. US-A-20030063242 discloses a device wherein bits generated within a device are added to a seed pool upon termination of a triggering event if the seed pool is not already populated.

For reasons such as those noted above, we have recognized that it would be advantageous to permit new randomness to be securely added to a wireless communication device within a wireless communication system.

The invention is defined in the independent claims. Optional features of the invention are defined in the dependent claims.

The exemplary embodiment of this invention permits added randomness to be securely transferred to a wireless communication device during secure data synchronization sessions with a user's base unit (e.g., a personal desktop computer).

In the exemplary embodiment, a user's mobile wireless device and base unit may be connected as usual by a trusted and secure wired connection (e.g., a serial I/O port connection between these units). If a secure over the air (OTA) data synchronization session is available, then such new random data may also be transferred via the secure OTA link (either from the user's base unit or from other available sources, if any).

In the exemplary embodiment, a random pool database is created and maintained in a device memory. The device is also provided with a secure data input/output port (e.g., a serial wired I/O port for wired connection to the user's base unit). The exemplary device also includes a control processor configured to store now or added random data in that random pool database memory based on new random data securely received via the secure I/O port. New random data may entirely replace the old random pool data or the new random pool data may result from a combination or permutation of received new random data.

In the exemplary embodiment the user's base unit may be configured to provide such new random data to the wireless communication device via an inter-connected secure input/output data port (e.g., a wired serial I/O port). The base unit may generate the new random data from an accessible software random number generator, hardware random number generator or external securely maintained and accessible website offering random number data. In fact, the new random data may be obtained from any one or all of such sources that might be accessible at a given time. The resulting new random data may be sheeted from one of such sources or may represent a combination or permutation from plural such sources.

This invention may be embodied in hardware, software or a combination of hardware and software. The invention also provides a method for securely adding randomness to a wireless communication device in a wireless communication system, The exemplary embodiment is realized at least in part, by executable computer program code which may be embodied in physical program memory media.

### BRIEF DESCRIPTION OF THE DRAWINGS

These and other objects and advantages of this invention will be better understood and appreciated in conjunction with the following detailed description of exemplary embodiments taken together with the accompanying drawings, of which:
FIG. 1 is an overall system wide schematic view of an exemplary wireless communication system incorporating a mobile wireless communication device with securely added randomness in accordance with one exemplary embodiment of this invention;
FIG. 2 is an abbreviated schematic diagram of hardware included within an exemplary mobile wireless communication device;
Fig. 3 is an abbreviated schematic functional diagram of the hardware/software utilized to achieve securely added randomness in the exemplary embodiment of FIG. 1;
FIG. 4 is an exemplary abbreviated schematic flow diagram of computer software (i.e., program logic) that may be utilized in the user's base unit in the exemplary embodiment of FIG. 1 so as to provide additional randomness for transmission to the mobile wireless communication device; and
FIG. 5 is an exemplary abbreviated schematic flow diagram of computer software (i.e., program logic) that may be utilized in the mobile wireless communication device of FIG. 1 to accept securely presented added randomness and store it in a maintained random pool database to thereby enhance subsequent cryptographic functions of the device in the exemplary embodiment

### DETAILED DESCRIPTION OF THE INVENTION

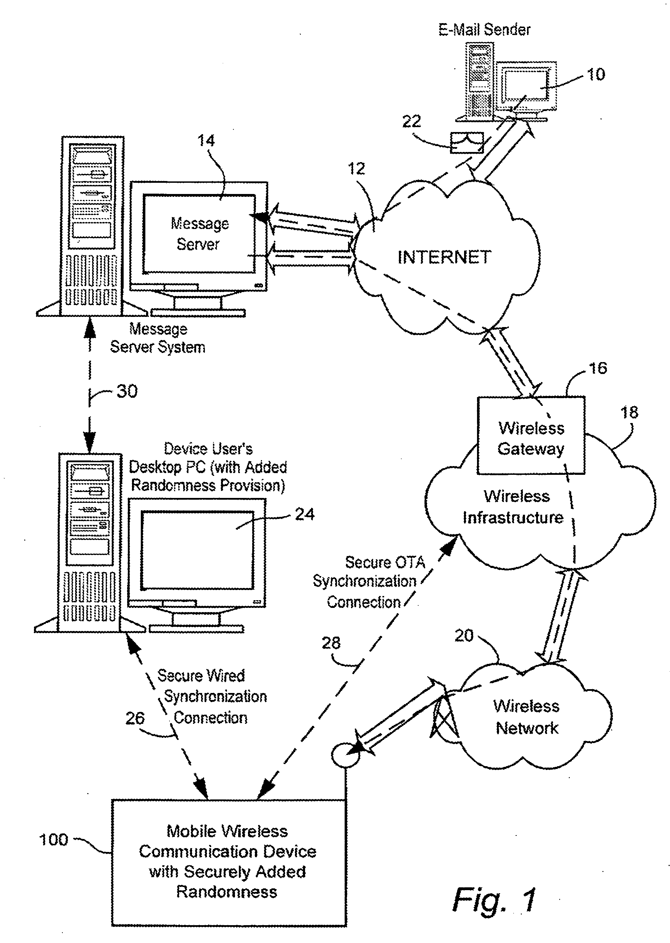

FIG. 1 is an overview of an exemplary communication system in which a wireless communication device 100 may be used in accordance with this invention. One skilled in the art will appreciate that there may be hundreds of different system topologies. There may also be many message senders and recipients. The simple exemplary system shown in FIG. 1 is for illustrative purposes only, and shows perhaps the currently most prevalent Internet e-mail environment.

FIG. 1 shows an e-mail sender 10, the Internet 12, a message server system 14, a wireless gateway 16, wireless infrastructure 18, a wireless network 20 and a mobile communication device 100.

An e-mail sender 10 may, for example, be connected to an ISP (Internet Service Provider) on which a user of the system has an account, located within a company, possibly connected to a local area network (LAN), and connected to the Internet 12, or connected to the Internet 12 through a large ASP (application service provider) such as America Online™ (AOL). Those skilled in the art will appreciate that the systems shown in FIG. 1 may instead by connected to a wide area network (WAN) other than the Internet, although e-mail transfers are commonly accomplished through Internet-connected arrangements as shown in FIG. 1.

The message server 14 may be implemented, for example, on a network computer within the firewall of a corporation, a computer within as ISP or ASP system or the like, and acts as the main interface for e-mail exchange over the Internet 12. Although other messaging systems might not require a message server system 14, a mobile device 100 configured for receiving and possibly sending e-mail will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. 1, as they do not directly play a role in the invention described below. Message servers such as server 14 typically extend beyond just e-mail sending and receiving; they also include dynamic database storage engines that have predefined database formats for data like calendars, to-do lists, task lists, e-mail and documentation.

The wireless gateway 16 and infrastructure 18 provide a link between the Internet 12 and wireless network 20. The wireless infrastructure 18 determines the most likely network for locating a given user and tracks the users as they roam between countries or networks. A message is then delivered to the mobile device 100 via wireless transmission, typically at a radio frequency (RF), from a base station in the wireless network 20 to the mobile device 100. The particular network 20 may be virtually any wireless network over which messages may be exchanged with a mobile communication device.

As shown in FIG. 1, a composed e-mail message 22 is sent by the e-mail sender 10, located somewhere on the Internet 12. This message 22 typically uses traditional Simple Mail Transfer Protocol (SMTP), RFC 822 headers and Multipurpose Internet Mail Extension (MIME) body parts to define the format of the mail message. These techniques are all well known to those skilled in the art. The message 22 arrives at the message server 14 and is normally stored in a message store. Most known messaging systems support a so-called "pull" message access scheme, wherein the mobile device 100 must request that stored messages be forwarded by the message server to the mobile device 100. Some systems provide for automatic routing of such messages which are addressed using a specific e-mail address associated with the mobile device 100. In a preferred embodiment, message addressed to a message server account associated with a host system such as a home computer or office computer base unit 24 which belongs to the user of a mobile device 100 are redirected from the message server 14 to the mobile device 100 as they are received. As will be explained below, the user's base system (e.g., a desktop PC) includes added randomness provisions (i.e, stored program logic) in the exemplary embodiment.

Regardless of the specific mechanism controlling forwarding of messages to mobile device 100, the message 22, or possibly a translated or reformatted version thereof; is sent to wireless gateway 16. The wireless infrastructure 18 includes a series of connections to wireless network 20. These connections could be Integrated Services Digital Network (ISDN), Frame Relay or T1 connections using the TCP/IP protocol used throughout the Internet As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) Network like Enhanced Data-rates for Global Evolution (EDGE) and Universal Mobile Telecommunications System (UMTS). Some older examples of data-centric network include the Mobitex™ Radio Network and the Data TAC Radio Network Examples of older voice-centric data networks include Personal Communication Systems (PCS) networks like GSM, and TDMA systems.

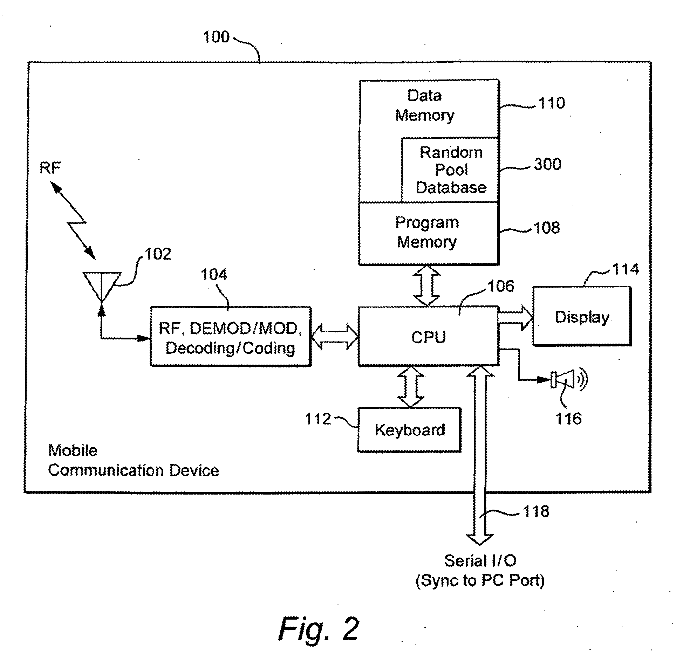

As depicted in FIG. 2, mobile communication device 100 includes a suitable RF antenna 102 for wireless communication to/from wireless network 20. Conventional RF, demodulation/modulation and decoding/coding circuits 104 are provided. As those in the art will appreciate, such circuits can involve possibly many digital signal processors (BSPs), microprocessors, filters, analog and digital circuits and the like. However, since such circuitry is well know in the art, it is not further described.

The mobile communication device 100 will also typically include a main control CPU 106 which operates under control of a stored program in program memory 108 (and which has access to data memory 110). CPU 106 also communicates with a conventional keyboard 112, display 114 (e.g, an LCD) and audio transducer or speaker 116. A portion of data memory 300 is available for storing a random pool of data. Suitable computer program executable code is stored in portion of program memory 108 to constitute stored program logic for receiving and using new, added, randomness as described below (e.g., via a wired serial I/O port 118 or the wireless RF antenna 102).

As depicted in FIG. 1, a secure wired synchronization connection 26 (e.g., between serial I/O ports of the user's base unit 24 and the wireless device 100) is typically provided for normal data synchronization purposes (e.g., to synchronize databases in the two devices with respect to such things as calendars, to-do lists, task lists, address books, etc.). Part of prior data synchronization processes has included a program logic such as Cert Sync for maintaining synchronization between cryptographic message certificates. If a secure over the air (OTA) synchronization connection 28 is available, it may also be used by Cert Sync to maintain synchronization of cryptographic message certificates.

As previously described, there is a communication link (e.g., depicted in dotted lines at 30 in FIG. 1) typically found between the device user's base unit 24 and a system message server 14. Accordingly, there is an existing communication path that may be utilized for passing synchronization data from the user's base unit 24 via channel 30, the server 14, Internet 12, wireless gateway 16 and wireless infrastructure 18 via the over the air (OTA) synchronization connection 28.

The mobile wireless communication device 100 may have less than desired randomness after being provisioned for the first time (e.g., in a manufacturing process where many similar devices are being created and provisioned or after the device memory has been "wiped" either unintentionally or for some intentional reason). However, a lot of security on the device 100 depends on randomness (e.g., to create cryptographic keys, cryptographic certificates and the like).

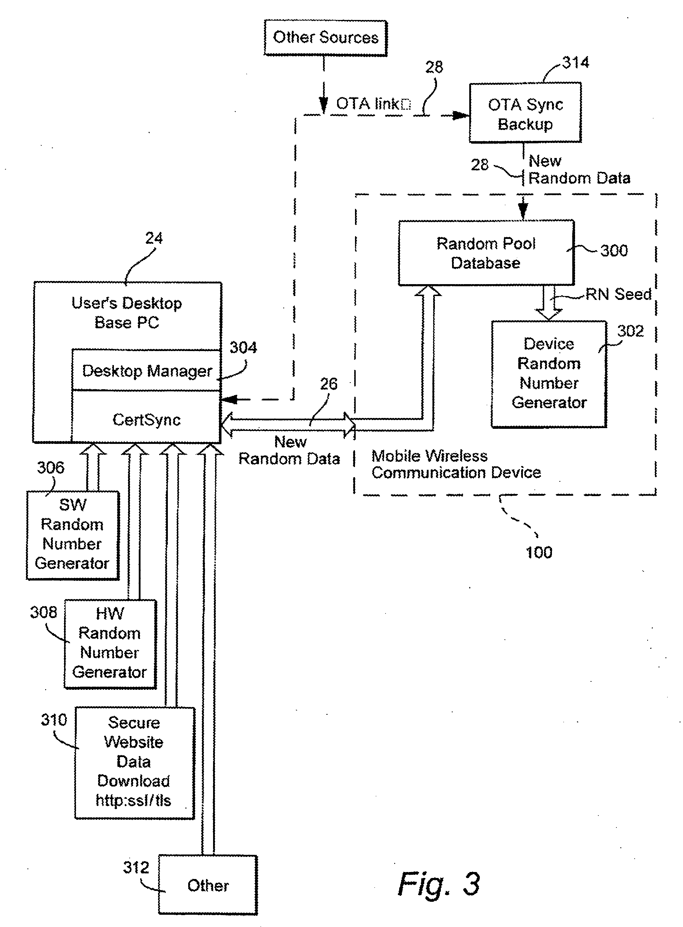

As depicted in FIG. 3, to provide desired additional randomness at anytime during the usage of device 100, a "random pool" database 300 has been created. For example, it might comprise a portion of the device data memory in which a string of randomly valued binary bits (e.g., 1024 bits) is stored. This random pool of bits may then be used (entirely or in part or in combination or permutation of parts thereof) to provide random seed data to a conventional device random number generator 302 as needed.

The user's base unit 24 (such as a desktop PC) may be of conventional hardware and operating system design. It will typically include desktop manager program logic 304 (e.g., executable computer program code) for managing, among other things, a normal (i.e., conventional) data synchronization connection to device 100. As previously mentioned, in the environment of mobile wireless communication systems, such a desktop manager may typically include logic for synchronizing cryptographic message certificates. Such logic is denoted here as Cert Sync. In the exemplary embodiment, additional functions of securely providing added randomness during data synchronization to device 100 have been added to the Cert Sync logic. However, as those skilled in the art will appreciate, The program logic to be described below for securely sending added randomness to device 100 may be associated with any desired portion of desktop manager 304 and/or may be provided as an entirely separate self-standing set of program logic (eg, computer software) if desired.

In the exemplary embodiment, whenever a user synchronizes device 100 with the base unit 24, the Cert Sync logic is configured to also send new random data to device 100 for use in the "random pool" database 300. The device 100 can then use this updated or additionally randomized data to help seed its own random number generator 302.

Cert Sync can generate such new additional random data in multiple ways. For example, the user's base unit 24 may already have its own software random number generator 306. The user's base unit 24 may also have its own hardware random number generator 308 (or a conventional hardware random number generator might be connected to that computer). The user's base unit 24 may also have an Internet connection that provides access to a secure website 310 by downloading random data from that website over secure links (e.g., http:ssl/tls, etc.). Cert Sync logic may also have access to other sources of random data 312.

As a further refinement, device 100 in the exemplary embodiment can "backup" some of its existing randomness via a secure OTA synchronization connection 28. For example, when device 100 performs an OTA backup 314, cryptographic code may add some additional random data to the "random pool" database 300 in the backup file. If the device 100 is subsequently "wiped" (i,e., its memory cleared) for any reason, then upon OTA backup restoration, such previously stored random data (possibly even with additional new data having been added thereto) will be returned to the device 100 and thus help seed the random number generator 302 in a more acceptable and more random fashion after restoration.

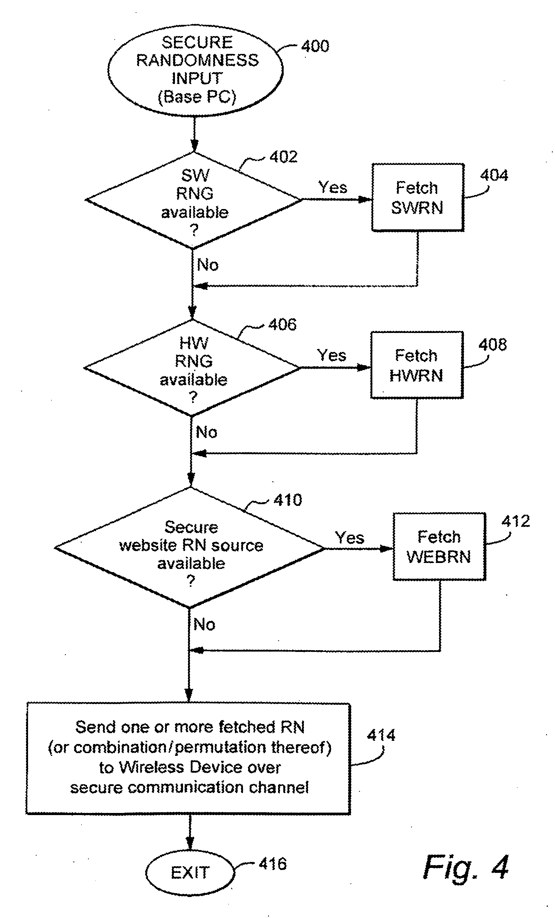

One possible configuration of added program logic for the Cert Sync routine executed in base unit 24 is depicted at FIG. 4. Here, during a part of the Cert Sync logic (not illustrated), transfer will be made to the Secure Randomness Input sub-routine at 400 in FIG. 4. In this sub-routine, base unit 24 may check for accessibility to a software random number generator (RNG) 402. If such is available, then such software generated random number (SWRN) is fetched at 404. A similar test is made at 406 for the availability of a hardware random number generator, If that is available, then a hardware random number (HWRN) is fetched at 408. A further test may be made at 410 for accessibility to a secure website random number source. If such is available, then a web random number (WEBRN) may be fetched at 412. Of course, as those in the art will appreciate, any one or more of these possible sources may be accessed alone or in combination as may be desired. For example, in a currently preferred embodiment, the computer's accessible software random number generator 306 is normally utilized alone without recourse to other possible sources. However, in that presently preferred embodiment, a system administrator is also given the option of setting up the program logic so as to query an accessible identified secure website source of random numbers.

In any event, from whatever source or sources the new random number data is obtained, the base unit logic is configured at 414 so as to send at least one such random number RN (perhaps comprising a combination or permutation of SWRN, HWAN, WEBRN) to the wireless device over a secure communication channel (e.g., the same secure communication channel that is typically used for other data synchronization purposes) before the sub-routine of FIG. 4 is exited at 416 and control is passed back to the main Cert Sync program logic,

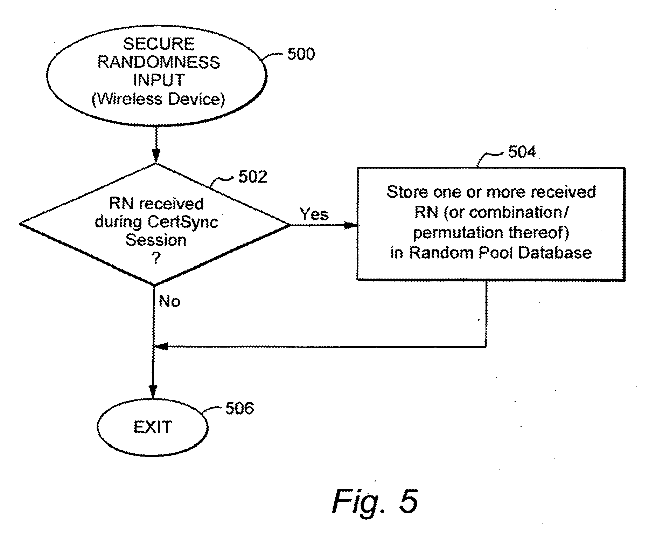

Of course, the mobile wireless communication device 100 must also include suitable program logic (in either hardware or software structure) so as to accept the incoming new random data and store it in the mndom pool database 300 for subsequent use. In the presently preferred exemplary embodiment such addition program logic is included in the corresponding Cert Sync portion of the data synchronization logic. Thus a Secure Randomness Input routine at the wireless device 100 side is entered at 500 as depicted in FIG. 5. A test may be made at 502 to see if new random number data RN has been received during a Cert Sync session. If so, then such new incoming randomness is stored at 504. As previously mentioned, one or more received random data (or some combination or permutation thereof) may be stored in whole or in part in the random pool database 300 so as to Increase its effective randomness. The sub-routine is then exited at 506 in FIG. 5.

In this current preferred exemplary implementation, device 100 and base unit 24 connect and synchronize data normally. However, during the synchronization process, a component of the desktop generates new random data. As previously mentioned, this can be done in multiple ways:
a. By using a software random number generator on the base unit 24 it is running on.
b. By querying a hardware random number generator connected to the base unit 24 it is running on.
c. By querying a URL, preferably over TLS/SSL for security, that has access to some source of random data.
d. Any other desired way.

The base unit 24 then transmits this new random data to the device 100 trough the normal data synchronization process. The device 100 accepts such incoming random data and adds it to its own pool of random data. This pool of random data is used to help seed the devices random number generator and thus provide it with more randomness or "entropy".

While the invention has been described in connection with what is presently considered to be the most practical and preferred exemplary embodiments, it is to be understood that the invention is not to be limited to the disclosed embodiments but, on the contrary, is intended to cover all variations, medications and equivalent arrangements included within scope of the appended claims.

A wireless communication device includes cryptographic functions requiring random data input, said device comprising: a random data memory having first random data stored therein; a secure data input port; and a control processor configured to store second random data in said memory based on new random data securely received via said input port. The second random data may entirely replace said first random data in said memory. The second random data may be a combination or permutation of said received new random data. The device may further comprise: a random data generator configured to accept random seed data from said random data memory. The secure data input port may comprise a wired connector suited for wired connection to a user's own trusted computer. The secure data input port comprises an encrypted wireless input communications channel.

A method for operating a wireless communication device includes cryptographic functions requiring random data input, said method comprising: maintaining a random data memory having first random data stored therein; providing a secure data input port; and storing second random data in said memory based on new random data securely received via said input port. The second random data may entirely replace said first random data in said memory. The second random data may be a combination or permutation of said received new random data. The method may further comprise: accepting random seed data into a random data generator from said random data memory. The secure data input port provision may comprise establishing a wired connection to a user's own trusted computer. The secure data input port may comprise establishing encrypted wireless input communications channel.

A stored computer program medium has stored therein a computer program for use in a wireless communication device including cryptographic functions requiring random data input, a random data memory having first random data stored therein, and, a secure data input port, said program, when executed causing: of a second random data in said memory based on new random data securely received via said input port. The second random data may entirely replace said first random data in said memory. The second random data is a combination or permutation of said received new random data.

A base system for use with a wireless communication device includes cryptographic functions requiring random data input and a memory storing random data used for generating such input, said system comprising: a secure input/output data port; and a control processor configured to provide new random data to said wireless communication device via said secure input/output data port. The secure input/output data port may include a trusted wired connection. The secure input/output data port may include a cryptographically secured wireless communication link. The control processor may be configured to: generate said new random data from a software random number generator accessible to said control processor; or generate said new random data from a hardware random number generator accessible to said control processor; or fetch new random data from a securely maintained and accessible external network site; or generate said new random data from a hardware random number generator accessible to said control processor; or fetch new random data from a securely maintained and accessible external network site. The control processor may be configured to obtain said new random data from at least one of the following sources, if accessible. a) a software random number generator; b) a hardware random number generator; or c) a remote secure website. The control processor may be configured to obtain said new random data fusing as many of said sources as are then accessible. The new random data is a combination or permutation of plural random data obtained from plural of said sources.

A method for operating a base system used with a wireless communication device includes cryptographic functions requiring random data input and a memory staling random data used for generating such input, said method comprising: providing a secure input/output data port; and sending new random data to said wireless communication device via said secure input/output data port. The secure input/output data port may include a trusted wired connection and/or a cryptographically secured wireless communication link. The new random data may be generated using: a software random number generator or a hardware random number generator; or a securely maintained and accessible external network site; or a hardware random number generator; or a securely maintained and accessible external network site. The new random data may be obtained from at least one of the following sources, if accessible: a) a software random number generator; b) a hardware random number generator; or c) a remote secure website. The new random data may be generated using as many of said sources as are then accessible. The new random data may be generated by combining or permuting plural random data obtained from plural of said sources.

A stored computer program medium having stored therein a computer program for use in a base system used with a wireless communication device includes cryptographic functions requiring random data input and a memory storing random data used for generating such input via a secure input/output data port, said stored program, when executed, causing: a new random data to be sent to said wireless communication device via said secure input/output data port. The new random data may be generated using: a software random number generator; or a hardware random number generator; or wherein said new random data is fetched from a securely maintained and accessible external network site; or wherein said new random data is generated using a hardware random number generator or using a software random number generator. The new random data may be obtained from at least one of the following sources, if accessible; a) a software random number generator; b) a hardware random number generator, or c) a remote secure website. The new random data way be obtained using as many of said sources as are then accessible. The new random data is a combination or permutation of plural random data obtained from plural of said sources.

A wireless communication system comprises: (a) a mobile wireless communication device including cryptographic functions requiring random data input, said device including: (i) a random data memory having first random data stored therein; (ii) a secure data input port; and (iii) a control processor configured to store second random data in said memory based on new random data securely received via said input port; and (b) a base sub-system for use with said wireless communication device, said base sub-system including: (i) a secure input/output data port; and (ii) a control processor configured to provide new random data to said wireless communication device via said secure input/output data port.

A method for operating a wireless communication system comprise: (a) providing a mobile wireless communication device including cryptographic functions requiring random data input, a random data memory having first random data stored therein, and a secure data input port; (b) storing second random data in said memory based on new random data securely received via said input port; (c) providing a base sub-system having a secure input/output data port for use with said wireless communication device; and (d) sending new random data to said wireless communication device via said secure input/output data port.

At least one stored communication medium having stored thereon computer programs for use in a wireless communication system includes: (a) a mobile wireless communication device including cryptographic functions requiring random data input, a random data memory having first random data stored therein, and as secure data input port; and (b) a base sub-system having a secure input/output data port for use with said wireless communication device; said computer programs when executed said device and base cause: (i) new random data to be sent to said wireless communication device via said secure input/output data port; and (ii) a second random data to be stored in said memory based on new random data securely received via said input port.

## Claims

1. A wireless communication device (100) configured to implement cryptographic functions utilizing random data input, the device comprising:
a random pool database (300) configured to store random data for subsequent device operation;
a control processor (106) configured to store random data in said random pool database based on input data securely received from an external trusted source (310) of new random data, **characterised by**:
said control processor (106) being configured to add randomness to said random pool database (300) by:
receiving added new random data as part of a synchronization process with the external trusted source, via an encrypted wireless input communications channel, and
storing the new added data in said random pool database.

2. The wireless communication device as in claim 1 wherein said new random data comprises a combination or permutation of plural random data obtained from the external trusted source (310) of new random data, wherein the external trusted source (310) of new random data comprises:
a software random number generator (306);
a hardware random number generator (308); or
a remote secure website (310).

3. The wireless communication device as in claim 1 further comprising a random data generator configured to accept random number seed input from said random pool database.

4. A method comprising:
storing random data in a random pool database (300) of a wireless communication device (100) configured for receiving random data, from an external trusted source (310) of new random data; and
adding randomness to the random pool database by receiving added new random data received as part of a synchronization process with the external trusted source, via an encrypted wireless input communications channel based on new input data securely received, via the encrypted wireless input communications channel.

5. The method as in claim 4 wherein said new random data comprises a combination or permutation of plural random data obtained from the external trusted source (310) of new random data, wherein the external trusted source (310) of new random data comprises:
a software random number generator (306);
a hardware random number generator (308); or
a remote secure website (310).

6. The method as in claim 4 further comprising accepting random number seed data into a random data generator from said random pool database.

7. A computer program medium having stored therein a computer program which, when executed in a wireless communication device (100) configured to implement cryptographic functions utilizing random data input, causes:
storage of new random data in a random pool database (300) of said wireless device based on new data securely received from an external trusted source (310) of new random data, as needed for subsequent device operation; and addition of randomness to the random pool database by:
receiving added new random data in said random data pool database (300), as part of a synchronization process with the external trusted source, via an encrypted wireless input communications channel.

8. The computer program medium as in claim 7, wherein said program, when executed, causes said new random data to replace entirely the random data previously stored in said random pool database.

9. A wireless communication system comprising:
An external trusted source (310) of new random data;
a mobile wireless communication device (100) configured to implement cryptographic functions utilizing random data input, said device including:
a random pool database (300) configured to store random data for subsequent device operation; and
a control processor (106) configured to store random data for subsequent device operation in said random pool database (300) based on new data securely received from the external trusted source (310) of new random data, the control processor being configured to add randomness to the random pool database by receiving added new random data as part of a synchronization process with the external trusted source, via an encrypted wireless input communications channel, and storing the new added data in said random pool database.

## Patentansprüche

1. Eine drahtlose Kommunikationsvorrichtung (100), die konfiguriert ist, kryptographische Funktionen unter Verwendung einer Zufallsdateneingabe zu implementieren, wobei die Vorrichtung aufweist:
eine Zufalls-Pool-Datenbank (300), die konfiguriert ist, Zufallsdaten für eine nachfolgende Vorrichtungsoperation zu speichern;
einen Steuerungsprozessor (106), der konfiguriert ist, Zufallsdaten in der Zufalls-Pool-Datenbank basierend auf Eingabedaten zu speichern, die sicher von einer externen vertrauenswürdigen Quelle (310) von neuen Zufallsdaten empfangen werden, **dadurch gekennzeichnet, dass**:
der Steuerungsprozessor (106) konfiguriert ist, eine Zufälligkeit zu der Zufalls-Pool-Datenbank (300) hinzuzufügen durch:
Empfangen hinzugefügter neuer Zufallsdaten als Teil eines Synchronisierungsprozesses mit der externen vertrauenswürdigen Quelle über einen verschlüsselten drahtlosen Eingabekommunikationskanal, und
Speichern der neuen hinzugefügten Daten in der Zufalls-Pool-Datenbank.

2. Die drahtlose Kommunikationsvorrichtung gemäß Anspruch 1, wobei die neuen Zufallsdaten eine Kombination oder Permutation von mehreren Zufallsdaten aufweisen, die von der externen vertrauenswürdigen Quelle (310) von neuen Zufallsdaten erlangt werden, wobei die externe vertrauenswürdige Quelle (310) von neuen Zufallsdaten aufweist:
einen Software- Zufallszahlengenerator (306);
einen Hardware-Zufallszahlengenerator (308); oder
eine entfernte sichere Webseite (310).

3. Die drahtlose Kommunikationsvorrichtung gemäß Anspruch 1, die weiter einen Zufallsdatengenerator aufweist, der konfiguriert, eine Zufallszahl-Anfangseingabe von der Zufalls-Pool-Datenbank anzunehmen.

4. Ein Verfahren, das aufweist:
Speichern von Zufallsdaten in einer Zufalls-Pool-Datenbank (300) einer drahtlosen Kommunikationsvorrichtung (100), die konfiguriert ist zum Empfangen von Zufallsdaten von einer externen vertrauenswürdigen Quelle (310) von neuen Zufallsdaten; und
Hinzufügen einer Zufälligkeit zu der Zufalls-Pool-Datenbank durch Empfangen hinzugefügter neuer Zufallsdaten, die empfangen werden als Teil eines Synchronisierungsprozesses mit der externen vertrauenswürdigen Quelle über einen verschlüsselten drahtlosen Eingabekommunikationskanal, basierend auf neuen Eingabedaten, die sicher empfangen werden über den verschlüsselten drahtlosen Eingabekommunikationskanal.

5. Das Verfahren gemäß Anspruch 4, wobei die neuen Zufallsdaten eine Kombination oder Permutation von mehreren Zufallsdaten aufweisen, die von der externen vertrauenswürdigen Quelle (310) von neuen Zufallsdaten erlangt werden, wobei die externe vertrauenswürdige Quelle (310) von neuen Zufallsdaten aufweist:
einen Software- Zufallszahlengenerator (306);
einen Hardware-Zufallszahlengenerator (308); oder
eine entfernte sichere Webseite (310).

6. Das Verfahren gemäß Anspruch 4, das weiter aufweist ein Annehmen von Zufallszahl-Anfangsdaten in einen Zufallsdatengenerator von der Zufalls-Pool-Datenbank.

7. Ein Computerprogramm-Medium, das darin ein Computerprogramm gespeichert hat, das bei Ausführung in einer drahtlosen Kommunikationsvorrichtung (100), die konfiguriert ist zum Implementieren von kryptographischen Funktionen unter Verwendung einer Zufallsdateneingabe, veranlasst:
Speichern von neuen Zufallsdaten in einer Zufalls-Pool-Datenbank (300) der drahtlosen Vorrichtung basierend auf neuen Daten, die sicher von einer externen vertrauenswürdigen Quelle (310) von neuen Zufallsdaten empfangen werden, wie erforderlich für eine nachfolgende Vorrichtungsoperation; und
Hinzufügen einer Zufälligkeit zu der Zufalls-Pool-Datenbank durch:
Empfangen hinzugefügter neuer Zufallsdaten in der Zufallsdaten-Pool-Datenbank (300) als Teil eines Synchronisierungsprozesses mit der externen vertrauenswürdigen Quelle über einen verschlüsselten drahtlosen Eingabekommunikationskanal.

8. Das Computerprogramm-Medium gemäß Anspruch 7, wobei das Programm bei Ausführung veranlasst, dass die neuen Zufallsdaten vollständig die Zufallsdaten ersetzen, die zuvor in der Zufalls-Pool-Datenbank gespeichert sind.

9. Ein drahtloses Kommunikationssystem, das aufweist:
eine externe vertrauenswürdige Quelle (310) von neuen Zufallsdaten;
eine mobile drahtlose Kommunikationsvorrichtung (100), die konfiguriert ist zum Implementieren von kryptographischen Funktionen unter Verwendung einer Zufallsdateneingabe, wobei die Vorrichtung umfasst:
eine Zufalls-Pool-Datenbank (300), die konfiguriert ist, Zufallsdaten für eine nachfolgende Vorrichtungsoperation zu speichern; und
einen Steuerungsprozessor (106), der konfiguriert ist, Zufallsdaten für eine nachfolgende Vorrichtungsoperation in der Zufalls-Pool-Datenbank zu speichern basierend auf neuen Daten, die sicher von der externen vertrauenswürdigen Quelle (310) von neuen Zufallsdaten empfangen werden, wobei der Steuerungsprozessor konfiguriert ist zum Hinzufügen einer Zufälligkeit zu der Zufalls-Pool-Datenbank durch Empfangen hinzugefügter neuer Zufallsdaten als Teil eines
Synchronisierungsprozesses mit der externen vertrauenswürdigen Quelle über einen verschlüsselten drahtlosen Eingabekommunikationskanal, und Speichern der neuen hinzugefügten Daten in der Zufalls-Pool-Datenbank.

## Revendications

1. Dispositif de communications sans fil (100) configuré pour mettre en oeuvre des fonctions cryptographiques utilisant des entrées de données aléatoires, le dispositif comprenant :
une base de données de pool de données aléatoires (300) configurée pour stocker des données aléatoires pour le fonctionnement ultérieur du dispositif ;
un processeur de commande (106) configuré pour stocker des données aléatoires dans ladite base de données de pool de données aléatoires en fonction de données d'entrée reçues de manière sécurisée en provenance d'une source extérieure fiable de nouvelles données aléatoires (310) ;
**caractérisé en ce que** ledit processeur de commande (106) est configuré pour ajouter un caractère aléatoire à ladite base de données de pool de données aléatoires (300) :
en recevant de nouvelles données aléatoires ajoutées dans le cadre d'un processus de synchronisation avec la source extérieure fiable, via un canal de communication d'entrée sans fil chiffré ; et
en stockant les nouvelles données ajoutées dans ladite base de données de pool de données aléatoires.

2. Dispositif de communications sans fil selon la revendication 1, dans lequel lesdites nouvelles données aléatoires comprennent une combinaison ou une permutation de plusieurs données aléatoires obtenues de la source extérieure fiable de nouvelles données aléatoires (310), dans lequel la source extérieure fiable de nouvelles données aléatoires (310) comprend :
un générateur logiciel de nombres aléatoires (306) ;
un générateur matériel de nombres aléatoires (308) ; ou
un site web distant sécurisé (310).

3. Dispositif de communications sans fil selon la revendication 1, comprenant en outre un générateur de données aléatoires configuré pour accepter une entrée de germe de nombres aléatoires provenant de ladite base de données de pool de données aléatoires.

4. Procédé comprenant les étapes consistant à :
stocker des données aléatoires dans une base de données de pool de données aléatoires (300) d'un dispositif de communications sans fil (100) configuré pour recevoir des données aléatoires provenant d'une source extérieure fiable de nouvelles données aléatoires (310) ; et
ajouter un caractère aléatoire à la base de données de pool de données aléatoires en recevant de nouvelles données aléatoires ajoutées, reçues dans le cadre d'un processus de synchronisation avec la source extérieure fiable, via un canal de communication d'entrée sans fil chiffré, en fonction de nouvelles données d'entrée reçues de manière sécurisée, via le canal de communication d'entrée sans fil chiffré.

5. Procédé selon la revendication 4, dans lequel lesdites nouvelles données aléatoires comprennent une combinaison ou une permutation de plusieurs données aléatoires obtenues de la source extérieure fiable de nouvelles données aléatoires (310), dans lequel la source extérieure fiable de nouvelles données aléatoires (310) comprend :
un générateur logiciel de nombres aléatoires (306) ;
un générateur matériel de nombres aléatoires (308) ; ou
un site web distant sécurisé (310).

6. Procédé selon la revendication 4, comprenant en outre l'étape consistant à accepter dans le générateur de données aléatoires une entrée de germe de nombres aléatoires provenant de ladite base de données de pool de données aléatoires.

7. Support de programme d'ordinateur portant stocké un programme d'ordinateur qui, lorsqu'il est exécuté dans un dispositif de communications sans fil (100) configuré pour mettre en oeuvre des fonctions cryptographiques utilisant des entrées de données aléatoires, commande :
le stockage de nouvelles données aléatoires dans une base de données de pool de données aléatoires (300) dudit dispositif sans fil, en fonction de nouvelles données reçues de manière sécurisée d'une source extérieure fiable de nouvelles données aléatoires (310), suivant ce qui est nécessaire pour le fonctionnement ultérieur du dispositif ; et
l'addition d'un caractère aléatoire à la base de données de pool de données aléatoires en recevant de nouvelles données aléatoires dans ladite base de données de pool de données aléatoires (300), dans le cadre d'un processus de synchronisation avec la source extérieure fiable, via un canal de communication d'entrée sans fil chiffré.

8. Support de programme d'ordinateur selon la revendication 7, dans lequel ledit programme, lorsqu'il est exécuté, commande le remplacement intégral des données aléatoires précédemment stockées dans ladite base de données de pool de données aléatoires par lesdites nouvelles données aléatoires.

9. Système de communications sans fil comprenant :
une source extérieure fiable de nouvelles données aléatoires (310) ;
un dispositif de communications mobile sans fil (100) configuré pour mettre en oeuvre des fonctions cryptographiques utilisant des entrées de données aléatoires, ledit dispositif comprenant :
une base de données de pool de données aléatoires (300) configurée pour stocker des données aléatoires pour le fonctionnement ultérieur du dispositif ; et
un processeur de commande (106) configuré pour stocker des données aléatoires dans ladite base de données de pool de données aléatoires (300) en fonction de données d'entrée reçues de manière sécurisée d'une source extérieure fiable de nouvelles données aléatoires (310), ledit processeur de commande étant configuré pour ajouter un caractère aléatoire à la base de données de pool de données aléatoires en recevant de nouvelles données aléatoires ajoutées dans le cadre d'un processus de synchronisation avec la source extérieure fiable, via un canal de communication d'entrée sans fil chiffré et en stockant les nouvelles données ajoutées dans ladite base de données de pool de données aléatoires.
